# EUROPEAN PATENT SPECIFICATION

(11) **EP 0 876 868 B1**
(45) Date of publication and mention of the grant of the patent: **13.08.2003**
(21) Application number: 98850048.4
(22) Date of filing: 03.04.1998
(51) Int. Cl.: B23B 51/04

(54) **Drill**
Bohrer
Foret

(30) Priority: 30.04.1997 SE 9701627
(43) Date of publication of application: 11.11.1998
(73) Proprietor: SECO TOOLS AB, S-737 82 Fagersta (SE)
(72) Inventor: Hamberg, Jens, 603 51 Norrköping (SE)
(74) Representative: Taquist, Lennart

(56) References cited:
- EP-A- 0 642 863
- EP-A- 0 750 960
- DE-C- 315 006

## Description

### Technical field of the invention

The present invention relates to a drill as per the preamble of claim 1.

### Prior art

Drills of the above-captioned type are used for chip removing machining and especially for drilling holes in metallic work pieces. During the machining chips are produced at the tip forming end of the drill shank, whereby the chips are formed and transported from the tip forming end of the shank to the opposite end of the drill shank. Said transport is being performed via the chip flutes.

To increase the depth of the chip flute of the central insert a design of a drill has been provided where a central cooling channel extending along a part of the length of the drill shank is replaced by two cooling channels which run along the entire length of the drill shank. At application of this known helix drill the cooling channels run helically in the drill shank, whereby the cooling channels are located between the helically running chip flutes, i.e. the cooling channels does not interfere with the chip flutes.

Through US-A-5,509,761 a drill is previously known where two straight cooling channels run along the entire axial extension of the shank and of the chip flutes. These both straight cooling channels have a certain inclination relative to the center axis of the drill in order to avoid interfering with the helical chip flutes. The preamble of the independent claim coincides with EP-A1-0 750960, which discloses a drill with completely straight cooling channels.

### Objects and features of the invention

The object of the present invention is to provide a drill of the above-captioned type where a simple production of the drill is combined with an adequate transport of the chips in the chip flutes, said transport being performed by means of a cooling medium, preferably a coolant, which is supplied via the cooling channels and is returned via the chip flutes. Another object of the present invention is that the design of the cooling channels and the chip flutes shall be such that the strength of the drill is not negatively influenced as compared to known drills. The objects of the present invention are realized by a drill which comprises the features of claim 1.

### Short description of the drawings

Below an embodiment of the invention is described with reference to the enclosed drawings, where
- Fig. 1: shows a side view of a drill according to an embodiment of the invention;
- Fig. 2: shows a section along II-II in Fig. 1;
- Fig. 3: shows a section along III-III in Fig. 1;
- Fig. 4: shows an end view of the shank of the drill according to an embodiment of the invention;
- Fig. 5: shows a section along V-V in Fig. 4; and
- Fig. 6: shows a schematic transverse section through a shank of the drill according to an embodiment of the invention, wherein the contours of the chips and the bore wall are shown.

### Detailed description of a preferred embodiment of the invention

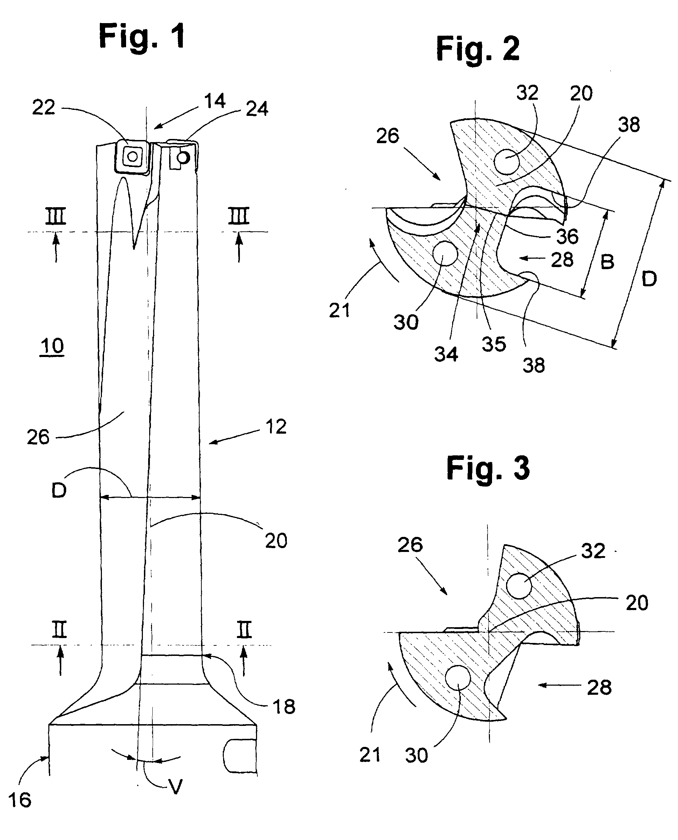

The drill 10 shown in Fig. 1 comprises a shank 12 having a first tip forming end 14 and a holder 16, to which a second opposed end 18 of the shank 12 is connected. The holder 16 is intended to be inserted in an adapter (not shown) of a machine tool. The shank 12 and the holder 16 have a common longitudinal center axis 20, which also constitutes the rotational axis of the drill 10. The rotational direction of the drill 10 has been indicated by the arrow 21 in Fig. 3.

The first tip forming end 14 of the shank 12 is provided with a central insert 22 and a peripheral insert 24 (partly hidden). Preferably the cutting inserts 22, 24 are exchangeable. The shank 12 has a substantially constant diameter D from the first tip forming end 14 to the second opposed end surface 18 which is connected to the holder 16.

In the shown embodiment two chip flutes 26, 28, of which only one 26 is shown in Fig. 1, extend helically from the first tip forming end 14 to the holder 16 where the chip flutes 26, 28 are finished by going out into nothing. Such as is shown in Fig. 1 the chip flute 26 has a certain helix angle v. A preferred value of said angle v lies within the interval of 2°-5°. The chip flute 28 not shown in Fig. 1 has a just as great helix angle v. In this connection it shall be noted that within the limits of the invention it is possible with a negative helix angle at the same rotational direction, see the arrow 21 in Fig. 3. A negative helix angle is advantageous for vibrational dampening of the drill 10.

Each chip flute 26, 28 has a cross-sectional shape which is substantially constant along the entire length L of the shank 12.

The drill 10 according to the invention is preferably intended for drills where the length of the shank L relates its to shank diameter D (see Fig. 1) as follows: 5xD ≥ L ≥ 3xD. If a suitable helix angle v is chosen within the above-identified interval a helical twist of the chip flutes 26, 28 of about 30° can be obtained over the entire length of the shank 12.

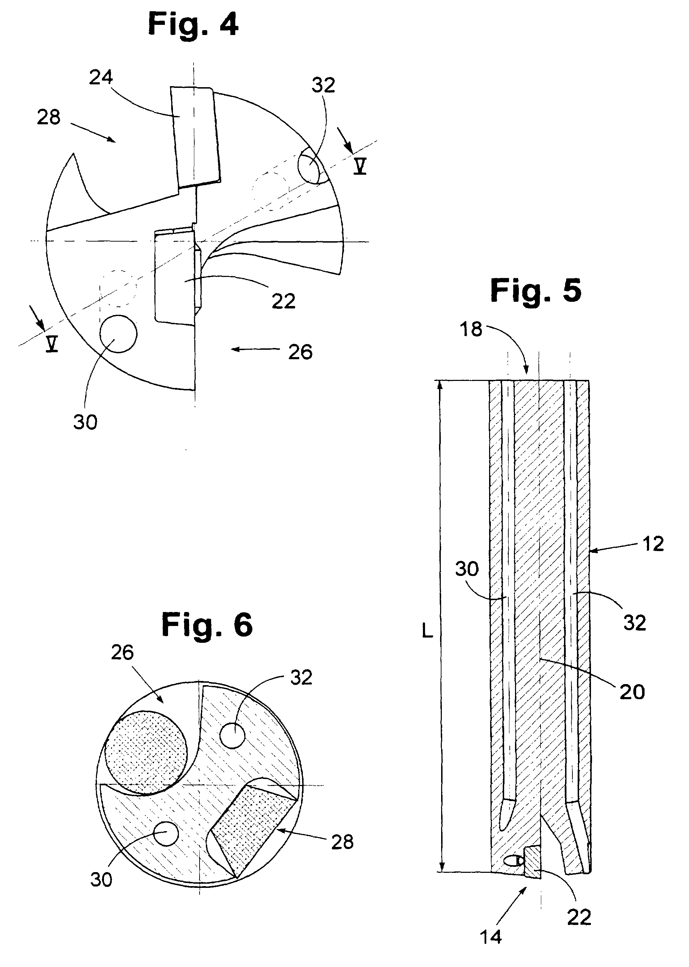

Such as is shown in Figs. 2-6 two cooling channels 30, 32 run in the shank 12, said cooling channels 30, 32 extending from the free end of the holder 16 and all the way through the shank 12 to the tip forming end 14 into which they open. In the shown example the cooling channels 30, 32 run parallel with the central axis 20 and at the same distance from this in the holder 16 as well as along a major part of the length L of the shank 12. Such as is most visibly shown in Fig. 4 and 5 a deflection of the cooling channels 30, 32 is provided before they open into the first tip forming end 14. The reason for this deflection is that the cooling channels 30, 32 will terminate in the first tip forming end 14 in such a way that they do not interfere with the cutting inserts 22, 24 or their fastening means. The cooling channel 32 opens also into the peripheral surface of the shank 12. From the shown sections in Figs. 2 and 3 is apparent that despite the fact that the chip flutes 26, 28 are helical the cooling channels 30, 32 do not interfere with the chip flutes 26, 28 along the entire length of the shank 12. This is perceived by placing the section II-II immediately adjacent the holder 16 and the section III-III adjacent the tip forming end 14. This naturally has its explanation in that the total helical twist above the entire length L of the shank 12 is only about 30°. The helical twist appears most clearly through study of the chip flute 28 in Figs. 2 and 3, wherein the total helical twist is small. In this connection shall be noted that it has surprisingly showed that also for drills with a shank length L to shank diameter D ratio of 5xD ≥ L ≥ 3xD, it is sufficient with a helical twist over the entire length L of the shank which is about 30° without registering any measurable deterioration of transfer of chips in the chip flutes 26, 28. This discovery has enabled the cooling channels 30, 32 to run straightly or recti-linearly and parallel with the central axis 20 along substantially the entire length L of the shank 12. This is an outstanding advantage at production of the drill 10 according to the present invention.

By having the cooling channels 30, 32 running at a distance from the center axis 20 of the shank 12 the web 34 of the drill 10, see Fig. 2, is intact, which is advantageous for the rigidity of the drill 10. The web diameter of the drill 10 is depicted with 35 in Fig. 2. Preferably, the web diameter 35 constitutes about 22% of the shank diameter D. From Figs. 2, 3 and 6 is apparent that the web 34 of the drill 10 is eccentrically located in relation to the center axis 20 of the drill 10, which depends on that the depth of the chip flute 26 for the central insert 22 has been increased while the depth of the chip flute 28 for the peripheral insert 24 has been diminished to a corresponding degree. It is generally known that the chips from the central insert 22 are circularly shaped while the chips from the peripheral insert 24 have a trapezoidal contour, see Fig. 6. The dimensions of the chips substantially depend on the cutting geometry of the tip forming end, and therefor one can empirically clarify which maximal dimensions for the respective chips a certain drill generates. This knowledge was used when dimensioning the chip flutes 26, 28.

Such as is illustrated in Fig. 6 it is important that the chip flute 26 has a depth which can contain the circularly shaped chip from the central insert 22 in the chip flute 26. In the chip flute 28 for the peripheral insert 24 the cross sectional area has been adapted to the utmost possible extent to the trapezoidal contour of the chip from the peripheral insert 24. As appears most clearly in Fig. 2 the chip flute 28 has a substantially planar bottom 36 and planar side-walls 38, which are substantially parallel with each other. The side-walls 38 and the bottom 36 are connected with each other via soft rounded transitions. The relationship between the width B of the chip flute 28 and the diameter D of the shank 12 is that B is preferably about half the diameter D, i.e. B ≈ 0,5xD. Through study of Fig. 6 is perceived that the cross section of the chip flute 28 in a striking manner has been adapted to the trapezoidal shape of the chip, especially the parallel side-walls of the chip flute 28 results in that at the periphery of the shank 12 only a minimum of goods has been removed in the area of the chip flute 28, which is advantageous for the rigidity of the drill 10.

## Claims

1. Drill (10) for chip removing machining, including a shank (12) having a longitudinal direction (L) and a first tip forming end (14), with at least two cutting edges, and a second opposed end (18), two chip flutes (26,28) which extend from the first tip forming end (14) to the opposite end (18) of the shank (12) and two cooling channels (30,32) which extend through the shank (12) of the drill (10) and terminate in the first tip forming end (14), wherein the cooling channels (30,32), along a major part of the length (L) of the shank (12) have a linear extension and run parallel with a center axis (20) of the shank (12) and that the drill (10) is a helix drill and by that one cutting edge is part of a central insert (22), and that the other cutting edge is part of a peripheral insert (24),
**characterized by** that the cooling channels (30,32) in the area closest to the tip forming end (14) deflect from their linear extension in the rest of the shank (12).

2. Drill (10) according to claim 1,
**characterized by** that the cooling channels (30,32) in its linear extension along the major part of the length (L) of the shank (12) are located at equal distance from the central axis (20).

3. Drill (10) according to claim 1 or 2,
**characterized by** that the chip flutes (26,28) have a helix angle (v) in the range of 2°-5°.

4. Drill (10) according to claim 1,
**characterized by** that the helical twist of the chip flutes (26,28) along the entire length (L) of the shank (12) is about 30°.

5. Drill according to anyone of the preceding claims,
**characterized by** that the web diameter (35) of the drill (10) constitutes about 22% of the diameter (D) of the shank.

6. Drill (10) according to claim 1,
**characterized by** that the chip flute (26) for the central insert (22) has a partly circular cross section.

7. Drill (10) according to claim 1 or 6,
**characterized by** that the chip flute (28) for the peripheral insert (24) has substantially parallel side-walls.

8. Drill (10) according to anyone of the claims 5-7,
**characterized by** that the chip flute (28) for the peripheral insert (24) has a width (B) which substantially corresponds to the half diameter (D) of the shank (12).

## Patentansprüche

1. Bohrer (10) für die spanabhebende Bearbeitung mit einem Schaft (12), der eine Längsrichtung (L) und ein erstes, eine Spitze bildendes Ende (14) hat mit mindestens zwei Schneidkanten, und ein zweites gegenüberliegendes Ende (18), zwei Spannuten (26, 28), die sich von dem ersten, die Spitze bildenden Ende (14) zu dem gegenüberliegenden Ende (18) des Schaftes (12) erstrecken, und zwei Kühlkanäle (30, 32) hat, die sich durch den Schaft (12) des Bohrers (10) erstrecken und in dem ersten, die Spitze bildenden Ende (14) enden, wobei die Kühlkanäle (30, 32) längs einem Hauptteil der Länge (L) des Schaftes (12) eine lineare Erstreckung haben und parallel zu einer Mittelachse (20) des Schaftes (12) verlaufen, wobei der Bohrer (10) ein Spiralbohrer ist und eine Schneidkante Teil eines Mitteleinsatzes (22) ist und die andere Schneidkante Teil eines Umfangseinsatzes (24) ist, **dadurch gekennzeichnet, daß** die Kühlkanäle (30, 32) in dem Bereich am nahesten an dem die Spitze bildenden Ende (14) von ihrer linearen Erstreckung im Rest des Schaftes (12) abbiegen.

2. Bohrer (10) nach Anspruch 1, **dadurch gekennzeichnet, daß** die Kühlkanäle (30, 32) in ihrer linearen Erstreckung längs des Hauptteils der Länge (L) des Schaftes (12) in gleichem Abstand von der Mittelachse (20) angeordnet sind.

3. Bohrer (10) nach Anspruch 1oder 2, **dadurch gekennzeichnet, daß** die Spannuten (26, 28) einen Spiralwinkel (v) im bereich von 2° - 5° haben.

4. Bohrer (10) nach Anspruch 1, **dadurch gekennzeichnet, daß** die spiralförmige Verdrillung der Spannuten (26, 28) längs der gesamten Länge (L) des Schaftes (12) etwa 30° beträgt.

5. Bohrer nach einem der vorhergehenden Ansprüche, **dadurch gekennzeichnet, daß** der Kerndurchmesser (35) des Bohrers (10) etwa 22% des Durchmessers (D) des Schaftes bildet.

6. Bohrer (10) nach Anspruch 1, **dadurch gekennzeichnet, daß** die Spannut (26) für den Mitteleinsatz (22) einen teilweise kreisförmigen Querschnitt hat.

7. Bohrer (10) nach Anspruch 1 oder 6, **dadurch gekennzeichnet, daß** die Spannut (28) für den Umfangseinsatz (24) im wesentlichen parallele Seitenwände hat.

8. Bohrer (10) nach einem der Ansprüche 5 bis 7, **dadurch gekennzeichnet, daß** die Spannut (28) für den Umfangseinsatz (24) eine Breite (B) hat, die im wesentlichen dem halben Durchmesser (D) des Schaftes (12) entspricht.

## Revendications

1. Foret (10) destiné à un usinage avec enlèvement de copeaux, comprenant un corps (12) présentant une direction longitudinale (L) et une première extrémité formant une pointe (14), avec au moins deux arêtes de coupe, et une seconde extrémité opposée (18), deux cannelures à copeaux (26, 28) qui s'étendent depuis la première extrémité formant une pointe (14) jusqu'à l'extrémité opposée (18) du corps (12) et deux canaux de refroidissement (30, 32) qui s'étendent au travers du corps (12) du foret (10) et aboutissent à la première extrémité formant une pointe (14), dans lequel les canaux de refroidissement (30, 32) le long d'une majeure partie de la longueur (L) du corps (12) présentent une extension linéaire et sont disposés parallèlement à un axe central (20) du corps (12) et tels que le foret (10) est un foret hélicoïdal et tels qu'un bord de coupe fait partie d'une plaquette centrale (22) et l'autre bord de coupe fait partie d'une plaquette périphérique (24), **caractérisé en ce que** les canaux de refroidissement (30, 32) dans la région la plus proche de l'extrémité formant une pointe (14) dévient par rapport à leur extension linéaire dans le reste du corps (12).

2. Foret (10) selon la revendication 1,
**caractérisé en ce que** les canaux de refroidissement (30, 32) dans leur extension linéaire le long de la majeure partie de la longueur (L) du corps (12) sont situés à égale distance par rapport à l'axe central (20).

3. Foret (10) selon la revendication 1 ou 2,
**caractérisé en ce que** les cannelures à copeaux (26, 28) présentent d'un angle d'hélice (v) dans la plage de 2° à 5°.

4. Foret (10) selon la revendication 1,
**caractérisé en ce que** la torsion hélicoïdale des cannelures à copeaux (26, 28) sur toute la longueur (L) du corps (12) est d'environ 30°.

5. Foret selon l'une quelconque des revendications précédentes,
**caractérisé en ce que** le diamètre de la lame centrale (35) du foret (10) constitue environ 22 % du diamètre (D) du corps.

6. Foret (10) selon la revendication 1,
**caractérisé en ce que** la cannelure à copeaux (26) pour la plaquette centrale (22) présente une section transversale partiellement circulaire.

7. Foret (10) selon la revendication 1 ou 6,
**caractérisé en ce que** la cannelure à copeaux (28) pour la plaquette périphérique (24) présente des parois latérales sensiblement parallèles.

8. Foret (10) selon l'une quelconque des revendications 5 à 7,
**caractérisé en ce que** la cannelure à copeaux (28) pour la plaquette périphérique (24) présente une largeur (B) qui correspond sensiblement au demi-diamètre (D) du corps (12).
